**Europäisches Patentamt**

**European Patent Office**

**Office européen des brevets**

(11) Publication number: **0 131 621**
**B1**

# EUROPEAN PATENT SPECIFICATION

(45) Date of publication of patent specification: **30.09.87**

(21) Application number: **84900779.4**

(22) Date of filing: **13.01.84**

(86) International application number:
**PCT/US84/00038**

(87) International publication number:
**WO 84/02947 02.08.84 Gazette 84/18**

(51) Int. Cl.⁴: **E 21 B 17/042, F 16 L 15/00**

(54) **TUBULAR JOINT WITH TRAPPED MID-JOINT METAL TO METAL SEAL.**

(30) Priority: **17.01.83 US 458733**
**17.01.83 US 458734**

(43) Date of publication of application:
**23.01.85 Bulletin 85/04**

(45) Publication of the grant of the patent:
**30.09.87 Bulletin 87/40**

(84) Designated Contracting States:
**AT BE CH DE FR GB LI LU NL SE**

(56) References cited:
**US-A-1 927 656**
**US-A-2 211 179**
**US-A-2 992 019**
**US-A-3 224 799**
**US-A-3 989 284**
**US-A-4 009 893**
**US-A-4 161 332**
**US-A-4 244 607**

(73) Proprietor: **HYDRIL COMPANY**
**714 West Olympic Boulevard**
**Los Angeles California 90015 (US)**

(72) Inventor: **BLOSE, Thomas, L.**
**1243 Kingsbridge**
**Houston, TX 77073 (US)**
Inventor: **CHELETTE, K., Darrel**
**21139 Southern Colony**
**Katy, TX 77449 (US)**
Inventor: **ORTLOFF, Donald, J.**
**3803 Valleyfield**
**Houston, TX 77080 (US)**
Inventor: **REEVES, Doyle, E.**
**11310 Colonial Trail**
**Houston, TX 77066 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates generally to oil and gas well tubing and more particularly has to do with the construction of high pressure tubular joints operable when made-up and run into a well to withstand extreme fluid pressures, both internal and external, that seek escape through the tubular assembly at the joints.

The search for oil and gas reserves has brought about the exploration of ever deeper formations. These deeper formations require longer strings of production pipe, casing, liners and drill pipe used in the exploration and production of oil and gas at extremely high pressures. This increased length of tubular strings imposes the upper portion of the string to very high tensile loads and in addition, the tubular strings are exposed to extremes of pressure both from within the tubing and also from the exterior of the tubing.

Prior art metal-to-metal sealing mechanisms have provided seals that resist mainly internal pressure or mainly external pressure, as long as the surrounding tubular geometry remains in the elastic range. The prior art sealing mechanisms have not solved the sealing problem of withstanding extremes of internal pressure, or external pressure, either pressure acting during circumstances of high tension, torque or compression forces acting on the tubing.

U.S. Patent No. 2,992,019 to M.D. MacArthur shows a casing joint having metal-to-metal sealing means responsive primarily to extremes of inside fluid pressure. The disclosed interior sealing for the pin and box provides a fourteen degree (14°) interior seal that is spaced a distance from the threaded inner connection to enable the deformation or strain on the pin, in response to the inside fluid pressure, to flex the pin interior sealing surface against the box interior sealing surface and obtain a greater sealing force. In addition, during such strain, the sealing contact area decreases which increases the sealing force over the reduced area. In particular, the distance between the pin and the seal surface remains the same while the center of the sealing area moves slightly toward the thread during such sealing flexing.

U.S. Patent No. 4,009,893 issued to Schatton, et al. discloses a tubing or casing joint with box and pin members having two axially spaced thread sections separated by a radial step zone which includes for the pin member, a resilient annulus having an axial undercut. The endface of the annulus bears against a surface which is not complementary to the endface in the step zone of the box member such that they will not lock in broad surface to surface engagement but will merely provide for a radial, rolling engagement between the surfaces. In addition to the thread stopface provided by the endface of the annulus, a stopface is provided at the end of the pin member and in the box member.

U.S. Patent No. 4,161,332 discloses a joint for tubular elements comprising, an internally threaded female member and an externally threaded male member adapted to be threadably connected, the threads of the female and male members having negative angle load flanks and having at least two radial steps axially separated from one another by a reverse angle torque shoulder, the torque shoulder of the male and female members being in direct engagement upon make-up of the joint whereby said shoulders serve as a positive axial and radial assembly stop. Upon full make-up of the joint, the mating of the respective torque shoulders disposed between the stepped threads establishes a seal for the joint. Under excessive axial pressure during make-up, however, the coining of these mating intermediate shoulders will cause second and third pairs of shoulders to come into interengagement to assist in holding the male and female members against radial and axial separation.

U.S. Patent No. 3,989,284 discloses a wedge-type threaded tubular connection in contrast with the so-called free-running thread utilized in the aforesaid U.S. Patent No. 4,161,332. In the wedge-type thread connector, the shoulders only engage upon full make-up of the thread and thus this type of connector locks the positive assembly stop such as that provided by the mating torque shoulders in the free-running thread connector of U.S. Patent No. 4,161,332. Further, in the wedge-type connector the primary means for assuring interlock of the members is furnished by the wedging interference of the flanks of the thread.

There has been a long-felt need for metal-to-metal sealing mechanisms for use in tubular joints which are able to hold mating members together for complete leak resistance against both internal and external pressures, regardless of the forces of tension, compression, internal pressure, external pressure, torque or any combination thereof that are applied to the joint.

It is therefore an object of this invention to provide a trapping mechanism in a joint to hold the mating members together for complete leak resistance in the face of multiple forces acting on the joint.

Not only must the joint be sealed, it must be capable of being made up and disassembled numerous times without galling and without the danger of stripping threads or cross-threading. It is, of course, desirable and therefore an advantage of the joint according to the invention disclosed herein in that it may be "stabbed" and that thereafter it can be made up with a relatively small number of turns.

It is common to use an integral or upset joint wherein the threaded portion of the pipe is thickened by a forging technique so as to provide more metal in the area where threads are cut. The invention disclosed below may advantageously be used with an integral or upset type of joint, and it may also be used with a threaded and coupled joint wherein both ends of the tubular elements are provided with male joining elements and a coupling member is provided with female joint elements.

The present invention therefore provides a joint for tubular elements comprising, an internally threaded female member and an externally threaded male member adapted to be threadably connected, the threads of the female and male members having negative angle load flanks and having at least two radial steps axially separated from one another by a reverse angle torque shoulder, the torque shoulders of the male and female members being in direct engagement upon make-up of the joint whereby said shoulders serve as a positive axial and radial assembly stop, characterized in that said torque shoulders have adjacent conical sealing surfaces with the sealing surface of the male member being formed at an angle complementary to that of the sealing surface of the female member, said adjacent conical sealing surfaces providing radial positional interference when the male and female members are fully assembled whereupon the negative load flank angle ($\phi$) of the threads and the reverse angle torque shoulder combine to interlock the male and female members and prevent differential radial separation of the engaged conical sealing surfaces when the joint is exposed to internal pressure, external pressure or both.

Further features and advantages of the invention will be better understood from the following description of preferred embodiments of the invention taken in connection with the accompanying drawings in which:

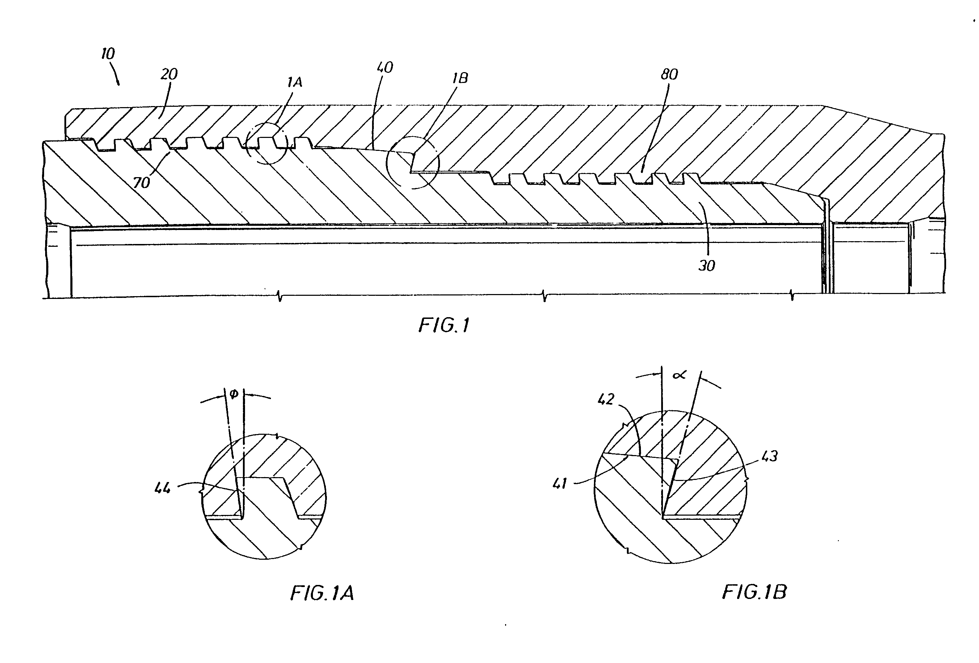

Figure 1 illustrates a longitudinal cross-sectional section through a joint according to the invention showing in detail in Figures 1A and 1B, the negative flank angle and the reverse torque shoulder features of the invention;

Figure 1 illustrates an alternative embodiment of the invention with a longitudinal cross-section showing threads cut on a taper angle with respect to the axis of the male and female members of the joint;

Figure 3 and Figure 3A shows an embodiment of the invention where the conical sealing surfaces of the male and female members are machined at slightly different angles; and

Figures 4A and 4B illustrate alternative embodiments of the invention where Figure 4A shows conical sealing surfaces on both sides of the reverse angle torque shoulder and Figure 4B illustrates the use of a reverse angle torque shoulder between two or more stepped threads.

Figure 1 illustrates, according to the invention, a joint shown generally at 10 comprising female or box member 20 in threaded connection with pin or male member 30 and having two step threads shown generally at 70 and 80 interconnected by a conical sealing surface 40. The joint is characterized, according to the invention, by providing a negative angle load flank 44 on the threads shown generally in more detail in Figure 1A and a reverse angle torque shoulder 43 shown in more detail in Figure 1B.

Figure 1A illustrates that the load flank 44 on the threads is at an angle $\phi$ which is measured counterclockwise from the vertical to the longitudinal plane of the threads.

Figure 1B illustrates that the sealing surfaces 41 and 42 of the pin and box members terminate in the torque shoulder 43 which is at a reverse angle $\alpha$ measured clockwise from the perpendicular to the longitudinal axis of the joint.

The initial sealing surface contact of surfaces 41 and 42 is established at assembly by metal-to-metal interference. Upon full make up of the joint, the mating of the respective torque angle shoulders may induce additional radial positional interference into the contacting sealing surfaces 41 and 42, especially for steep shoulder angles. Thus, two sources of radial positional interference are possible in the joint of the assembled members according to the invention: interference caused by the assembly of the sealing surfaces 41 and 42 and, for reverse torque angle shoulder provided with steep angles, interference caused by the mating of the respective shoulders. The seal pressure retention characteristic of the threaded connection is related to the ability of the sealing surfaces 41 and 42 to remain in contact with one another as radial deflection of the joint occurs from either internal pressure or external pressure. The unique seal retention according to the invention results from the trapping effect of the negative load flank threads of both the large step threads 70 and the small step threads 80 in combination with the reverse angle shoulder 43 in the intermediate region between the steps thereby preventing loss of surface contact between surfaces 41 and 42. The trapping effect causes the two surfaces 41 and 42 to deflect as one.

The seal is established regardless of differences in the annular section areas of each member 41 and 42 thus providing a pressure containment wherein forces act from either side of the seal. In addition, the application of an axial tensile load will cause the seal surface to remain in contact. Similarly, torque forces on the joint do not adversely affect the seal of the' joint. Advantageously, the only way that the sealing surfaces can separate is for extreme forces acting on the joint to cause the threads to shear, the shoulder to shear, or both.

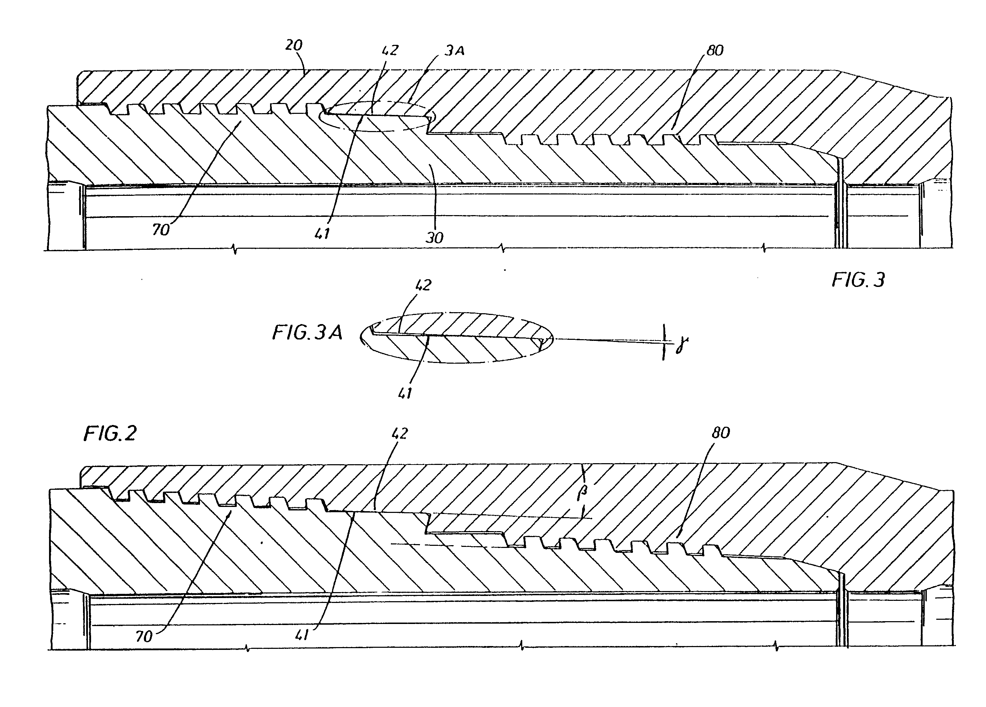

Although Figure 1 shows the threads 70 and 80 to be cut parallel to the axis of box member 20 and pin member 30, an alternative embodiment is shown in Figure 2 where threads 70 and 80 are cut on a taper angle shown generally as $\beta$. Although Figure 2 illustrates the sealing surfaces 41 and 42 to be cut at the same taper angle $\beta$ as are the threads 70 and 80, they may advantageously be provided at a taper angle different from the thread taper.

Figure 3 shows another alternative embodiment of the invention whereby the conical sealing surfaces 41 and 42 of the top step are machined to slightly different angles with respect to the axis of the joint. According to a further preferred aspect of the invention, the conical seal surface of the member having the thinner wall thickness at the seal surface may be machined to a smaller angle with respect to the axis of the threaded connection than the complementary conical seal surface of the mating member. Individual sealing shoulder members are shown in more detail in Figure 3A. Because the conical seal at the upper step illustrated in Figure 3A occurs at a region where the female member 20 wall thickness is less than the wall thickness of the male member, the sealing surface 42 of the female member is machined to an angle of incline which is slightly less than the angle of incline of sealing surface 41. Figure 3A indicates the angle difference to be γ. The mismatch of the angles of inclines of conical sealing surfaces 42 and 41 is selected for any particular seal geometry such that at final make-up, the bearing load has a relatively even distribution across the entire sealing surface in contact, thus broadly distributing make-up stresses and minimizing their negative effects.

Referring to Figure 3A where for the upper step having the female conical sealing surface 42 machined at an angle slightly less than that of male surface 41, when the pin member 30 initially mates with box member 20, the bearing load is substantially on the leading edge of the box sealing surface 42 with the trailing edge of the pin sealing surface 41. After the sealing surfaces are fully made-up, the stress as a function of axial width becomes more uniform than for the case where the taper angles of the sealing surfaces are the same or where the taper angle of the box sealing surface is greater than the taper angle of the pin sealing surface.

Metal-to-metal seal taper angles commonly are provided in a range of from two degrees (2°) to fourteen degrees (14°). The exact angular taper mismatch of the sealing angles of surfaces 41 and 42 varies depending on the seal angle of the more rigid member, the width of the sealing surface, the thickness of the thinner member, desired tolerances and other factors. It can be shown that seal mismatch for very low angle seals of approximately 12.7 mm (one-half (1/2″) inch) in axial width can be as low as one-quarter degree (1/4°). High angle seals of equal axis width may require a mismatch of one degree (1°) or more for complete balancing of bearing loads upon full make-up. Finite element analysis may be used as a tool to verify the optimum seal angle mismatch on any given seal and connection geometry.

Figure 3 also shows that threads 70 and 80 may be interference fitting threads.

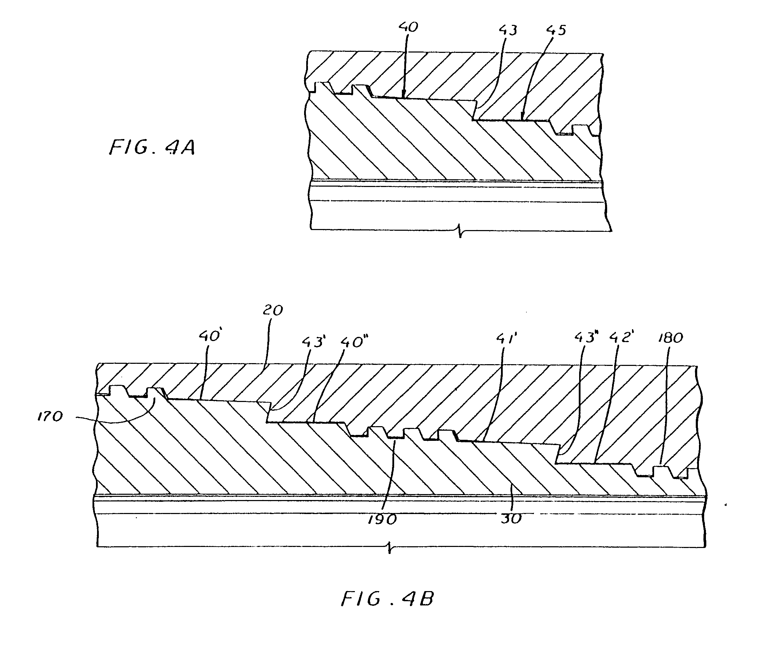

Figures 4A and 4B illustrate alternative embodiments of the invention. Figure 4A illustrates the reverse angle torque shoulder 43 between the two step threads and having not only conical sealing surface 40 (as illustrated in Figure 1) on the large step, but also conical sealing surface 45 on the small step. Alternatively a conical sealing surface 45 could be provided solely on the small step with no sealing surface being provided on the large step. Thus, one conical sealing surface provided on either step adjacent the reverse angle torque shoulder, or two sealing surfaces, one provided on each of the steps, serve in conjunction with the reverse angle torque shoulder and the negative angle load flank threads to create the unique trapping effect of the invention.

Where as illustrated in Figure 4A, a conical sealing surface is provided as at 45 on the small step and the female member 20 wall thickness is greater than the thickness of the male member, the sealing surface of the female member is machined to an angle of incline which is slightly greater than the angle of incline of the sealing surface of the male member.

Figure 4B illustrates that the combination of negative load flank threads and reverse angle torque shoulder between stepped threads may be used for tubular connections or joints having two or more stepped threads. For example, triple radial step threads 170, 190, and 180 may advantageously be used for thick walled tubulars. According to the invention, reverse angle torque shoulders 43' and 43'' are provided between thread steps 170 and 190 and between thread steps 190 and 180. Providing one conical sealing surface such as 40' or 40'' on each axial side of shoulder 43' and one conical sealing surface such as 41' or 42' or both 41' and 42' on each axial side of shoulder 43'' serves to achieve the trapping effect discussed above when used in combination with negative load flank threads. More stepped threads with intermediate reverse angle torque shoulders and associated conical sealing surfaces could advantageously find applications for tubulars having extremely thick walls.

In all the embodiments of this invention the magnitude of the negative thread flank angle or the angle of the reverse angle shoulder should not exceed thirty degrees (30°). In addition, it has been found that the magnitude of the angle of the conical sealing surfaces relative to the joint axis should not be greater than fifteen degrees (15°). Finally, for that embodiment of the invention illustrated in Figure 3, the dissimilarity of the angles of incline of the sealing surfaces of the male and female members should be less than one degree where the angle of incline of the member having the greater wall thickness should be greater than that of the member having the lesser wall thickness.

From the foregoing, it is apparent that there has been provided a sealing surface for use in joints, and interconnecting tubular member especially useful in oil and gas wells.

**Claims**

1. A joint (10) for tubular elements comprising, an internally threaded female member (20) and an externally threaded male member (30) adapted to be threadably connected, the threads (70, 80) of the female and male members (20, 30) having negative angle load flanks (44) and having at least two radial steps axially separated from one another by a reverse angle torque shoulder (43), the torque shoulders (43) of the male and female members (20, 30) being in direct engagement upon make-up of the joint whereby said shoulders (43) serve as a positive axial and radial assembly stop, characterized in that said torque shoulders (43) have adjacent conical sealing surfaces (41, 42) with the sealing surface (41) of the male member (30) being formed at an angle complementary to that of the sealing surface (42) of the female member (20), said adjacent conical sealing surfaces (41, 42) providing radial positional interference when the male and female members (20, 30) are fully assembled whereupon the negative load flank angle ($\phi$) of the threads (70, 80) and the reverse angle ($\alpha$) of the torque shoulder (43) combine to interlock the male and female members (20, 30) and prevent differential radial separation of the engaged conical sealing surfaces when the joint (10) is exposed to internal pressure, external pressure or both.

2. The joint of claim 1, characterized in that the threads (70, 80) are angularly tapered with respect to the tubular axis.

3. The joint of claim 1 or 2, characterized in that the taper angle of the threads (70, 80) and the taper angle of the complementary conical sealing surfaces are the same.

4. The joint of claim 1 or 2, characterized in that said conical sealing surfaces (41, 42) are provided at a different taper angle from the taper angle of the threads (70, 80).

5. The joint of any of claims 1 to 4, characterized in that the taper angles of said conical sealing surfaces (41, 42) are less than fifteen degrees.

6. The joint of any of claims 1 to 5, characterized in that the respective angles of the negative load flanks and the reverse angle torque shoulder (44) are each less than thirty degrees.

7. The joint of any of claims 1 to 6, characterized in that the threads (70, 80) of said female and male members (20, 30) when connected produce an interference fitting thread.

8. The joint of any of claims 1 to 7, characterized in that there are three radial steps (170, 180, 190) each axially separated from one another, at least one of said shoulders (43'') between each step (170, 180, 190) providing said positive assembly stop.

9. The joint of claim 8, characterized in that each reverse angle torque shoulders (43'') is between two adjacent conical sealing surfaces (40', 41', 42').

10. The joint of claim 1 or 2, characterized in that the taper angle of the conical sealing surface (42) of the member (20) having the thinner wall thickness at the seal surface is inclined at a smaller angle with respect to the axis of the threaded connection than the complementary conical seal surface (41) of the mating member (20).

11. The joint of claim 10, characterized in that the member having the thinner wall thickness is the female member (20) whose sealing surface (42) is tapered with respect to the female member axis at a first angle, and the conical sealing surface (41) of the male member (30) is tapered with respect to the axis of the male member (30) at an angle greater than the taper angle of the female member (20), and wherein initial mating of said male conical sealing surface (41) with the female conical sealing surface (42), develops a bearing load substantially on the leading edge of the female sealing surface (42) with the trailing edge of the male sealing surface (41) and wherein the angle difference between the male sealing surface (41) and the female sealing surface (42) is selected such that the bearing load across the entire axial width of the seal of mating female conical sealing surface (42) and male conical sealing surface (41) is a relatively even distribution at final make-up.

12. The joint of claim 11, characterized by a second adjacent conical seal between the lower step (80) and the reverse angle torque shoulder (43) wherein the second conical sealing surface (45) of the female member (30) is tapered with respect to the female axis at an angle and the second conical sealing surface (45) of the male member (30) is tapered with respect to the axis of the male member (30) at an angle less than the taper angle of the female member (20), and wherein initial mating of the second male conical sealing surface (45) with the second female conical sealing surface (45), the bearing load is substantially on the leading edge of the second male sealing surface (45) with the trailing edge of the second female sealing surface (45), and wherein the angle difference between the second male sealing surface (45) and the second female sealing surface (45) is selected such that the bearing load across the entire axial width of the seal of mating second female conical sealing surface (45) and second male conical sealing (45) surface is a relatively even distribution at final make-up.

13. The joint of claim 10, characterized in that the sealing surface (42') of the female member (20) is tapered with respect to the female member axis at a first angle, and the conical sealing surface (41) of the male member (30) is tapered with respect to the axis of the male member (30) at an angle less than the taper angle of the female member (20), and wherein initial mating of the male conical sealing surface (41') with the female conical sealing surface (42') develops a bearing load substantially on the leading edge of said male sealing surface (41') with the trailing edge of the female sealing surface (42') and wherein the angle difference between the male sealing surface (41') and the female sealing surface (42') is selected such that the bearing load across the entire axial width of the seal of mating female conical sealing surface (42') and male conical sealing surface (41') is a relatively even distribution at final make-up.

14. The joint of any of the preceding claims, characterized in that the male member conical sealing surface (41) is formed on a substantially solid pipe wall uninterrupted from the interior of the male member (30) to the sealing surface (41) thereof.

**Patentansprüche**

1. Verbindung (10) zwischen rohrförmigen Elementen mit einem mit einem Innengewinde versehenen Weibchen (20) und einem mit einem Außengewinde versehenen Männchen (30), die miteinander verschraubbar sind, wobei die Gewinde (70, 80) des Weibchens und des Männchens (20, 40) Lastflanken (44) mit negativem Winkel haben und mindestens zwei radiale Stufen besitzen, die durch eine Drehmomentschulter (43) mit gegensinnigem Winkel axial voneinander getrennt sind und die Drehmomentschultern des Männchens und des Weibchens (30, 20) nach vollständigem Verschrauben direkt aneinander angreifen, so daß die Schultern (43) das Verschrauben axial und radial formschlüssig begrenzen, dadurch gekennzeichnet, daß die Drehmomentschultern (43) einander benachbarte konische Dichtflächen (41, 42) haben, die Dichtfläche (41) des Männchens (30) unter einem Winkel ausgebildet ist, der zu dem der Dichtfläche (42) des Weibchens komplementär ist, die einander benachbarten konischen Dichtflächen (41, 42) eine radiale Preßpassung bilden, wenn das Männchen und das Weibchen (20, 30) vollständig miteinander verschraubt sind, so daß der negative Lastflankenwinkel (φ) der Gewinde (70, 80) und der gegensinnige Winkel (α) der Drehmomentschulter (43) derart zusammenwirken, daß das Männchen und das Weibchen (20, 30) miteinander verriegelt sind und in der einem Innen- und/oder Außendruck ausgesetzten Verbindung (10) eine radiale Trennung der aneinander angreifenden konischen Dichtflächen verhindert wird.

2. Verbindung nach Anspruch 1, dadurch gekennzeichnet, daß die Gewinde (70, 80) schräg zu der Rohrachse verjüngt sind.

3. Verbindung nach Anspruch 1 oder 2, dadurch gekennzeichnet, daß die Verjüngungswinkel der Gewinde (70, 80) und der Verjüngungswinkel der zueinander komplementären konischen Dichtflächen gleich sind.

4. Verbindung nach Anspruch 1 oder 2, dadurch gekennzeichnet, daß die konischen Dichtflächen (41, 42) einen anderen Verjüngungswinkel haben als die Gewinde (70, 80).

5. Verbindung nach einem der Ansprüche 1 bis 4, dadurch gekennzeichnet, daß die Verjüngungswinkel der konischen Dichtflächen (41, 42) kleiner sind als fünfzehn Grad.

6. Verbindung nach einem der Ansprüche 1 bis 5, dadurch gekennzeichnet, daß die Winkel der negativen Lastflanken und der gegensinnigen Winkel der Drehmomentschulter (44) jeweils kleiner sind als dreißig Grad.

7. Verbindung nach einem der Ansprüche 1 bis 6, dadurch gekennzeichnet, daß die miteinander verschraubten Gewinde (70, 80) des Weibchens und des Männchens (20, 30) eine Preßpassung bilden.

8. Verbindung nach einem der Ansprüche 1 bis 7, dadurch gekennzeichnet, daß drei radiale Anschläge (170, 180, 190) in Axialabständen voneinander angeordnet ist und mindestens eine der zwischen jeweils zweien der Anschläge (170, 180, 190) vorgesehenen Schultern (43'') das Verschrauben formschlüssig begrenzt.

9. Verbindung nach Anspruch 8, dadurch gekennzeichnet, daß jede der unter einem gegensinnigen Winkel angeordneten Drehmomentschultern (43'') zwischen zwei einander benachbarten konischen Dichtflächen (40', 41', 42) angeordnet ist.

10. Verbindung nach Anspruch 1 oder 2, dadurch gekennzeichnet, daß die konische Dichtfläche (42) jenes Teils (20), der an der Dichtfläche die kleinere Wandstärke hat, gegenüber der Achse der Verschraubung unter einem kleineren Verjüngungswinkel geneigt ist als die dazu komplementäre Dichtfläche (41) des anderen Teils (20).

11. Verbindung nach Anspruch 10, dadurch gekennzeichnet, daß der Teil mit der kleineren Wandstärke das Weibchen (20) ist, dessen Dichtfläche (42) gegenüber der Achse des Weibchens unter einem ersten Winkel geneigt ist, daß die konische Dichtfläche (41) des Männchens gegenüber der Achse des Männchens (30) unter einem Winkel verjüngt ist, der größer ist als der Verjüngungswinkel des Weibchens (20), daß beim Ansetzen der konischen Dichtfläche (41) des Männchens an die konische Dichtfläche (42) des Weibchens eine Lagerbelastung im wesentlichen an dem vorlaufenden Rand der Dichtfläche (42) des Weibchens und dem nachlaufenden Rand der Dichtfläche (41) des Männchens auftritt, und daß die Winkeldifferenz zwischen der Dichtfläche (41) des Männchens und der Dichtfläche (42) des Weibchens so ausgewählt ist, daß nach vollständigem Verschrauben die Lagerbelastung im wesentlichen gleichmäßig über die ganze axiale Breite der Abdichtung zwischen der konischen Dichtfläche (42) des Weibchens und der daran anliegenden konischen Dichtfläche (41) des Männchens verteilt ist.

12. Verbindung nach Anspruch 11, gekennzeichnet durch eine zweite benachbarte konische Abdichtung zwischen der unteren Stufe (80) und der unter einem gegensinnigen Winkel angeordneten Drehmomentschulter (43), wobei die zweite konische Dichtfläche (45) des Weibchens (30) gegenüber der Achse des Weibchens unter einem Winkel verjüngt ist, die zweite konische Dichtfläche (45) des Männchens (30) gegenüber der Achse des Männchens (30) unter einem Winkel verjüngt ist, der kleiner ist als der Verjüngungswinkel des Weibchens (20), beim Ansetzen der zweiten konischen Dichtfläche (45) des Männchens an die zweite konische Dichtfläche (45) des Weibchens die Lagerbelastung im wesentlichen an dem vorlaufenden Rand der zweiten Dichtfläche (45) des Männchens und dem nachlaufenden Rand der zweiten konischen Dichtfläche (45) des Weibchens auftritt, der Winkelunterschied zwischen der zweiten Dichtfläche (45) des Männchens und der zweiten Dichtfläche (45) des Weibchens so ausgewählt ist, daß nach vollständigem Verschrauben die Lagerbelastung relativ gleichmäßig über die ganze axiale Breite der Abdichtung zwischen der zweiten konischen Dichtfläche (45) des Weibchens und der an ihr anliegenden zweiten konischen Dichtfläche (45) des Männchens verteilt ist.

13. Verbindung nach Anspruch 1, dadurch gekennzeichnet, daß die Dichtfläche (42') des Weibchens (20) gegenüber der Achse des Weibchens unter einem ersten Winkel verjüngt ist, daß die konische Dichtfläche (41') des Männchens (30) gegenüber der Achse des Männchens (30) unter einem Winkel verjüngt ist, der kleiner ist als der Verjüngungswinkel des Weibchens, das beim Ansetzen der konischen Dichtfläche (41') des Männchens an die konische Dichtfläche (42') des Weibchens zwischen dem vorlaufenden Rand der Dichtfläche (41') des Männchens und dem nachlaufenden Rand der Dichtfläche (42') des Weibchens eine Lagerbelastung auftritt, und daß die Winkeldifferenz zwischen der Dichtfläche (41') des Männchens und der Dichtfläche (42') des Weibchens so gewählt ist, daß nach vollständigem Verschrauben die Lagerbelastung relativ gleichmäßig über die ganze axiale Breite der Abdichtung zwischen der konischen Dichtfläche (42') des Weibchens und der an ihr anliegenden konischen Dichtfläche (41') des Männchens verteilt ist.

14. Verbindung nach einem der vorhergehenden Ansprüche, dadurch gekennzeichnet, daß die konische Dichtfläche (41) des Männchens an einer im wesentlichen geschlossenen Rohrwand ausgebildet ist, die vom Innern des Männchens (30) bis zu dessen Dichtfläche (41) ununterbrochen ist.

**Revendications**

1. Joint (10) pour éléments tubulaires, comportant un organe femelle taraudé (20) intérieurement et un organe mâle (30) fileté extérieurement, ces organes étant aptes à être raccordés par vissage, les filetages (70, 80) des organes femelle et mâle (20, 30) comportant des flancs de charge (44) orientés selon un angle négatif et comportant au moins deux parties radiales étagées séparées axialement l'une de l'autre par un épaulement (43) d'application d'un couple, orienté selon un angle opposé, les épaulements (43) d'application d'un couple, que comportant les organes mâle et femelle (20, 30) étant en contact direct lors de l'assemblage du joint, ce qui a pour effet que lesdits épaulements (43) constituent une butée d'assemblage axiale et radiale fixe, caractérisé en ce que les épaulements (43) d'application d'un couple possèdent des surfaces coniques adjacentes d'étanchéité (41, 42), parmi lesquelles la surface d'étanchéité (41) de l'organe mâle (30) fait un angle complémentaire de celui de la surface d'étanchéité (42) de l'organe femelle (20), lesdites surfaces coniques adjacentes d'étanchéité (41, 42) établissant un ajustement radial en position lorsque les organes mâles et femelle (20, 30) sont complètement assemblés, avec pour effet que l'angle négatif (φ) des flancs de charge des filetages (70, 80) et l'angle opposé (α) de l'épaulement (43) d'application d'un couple se combinent pour verrouiller les organes mâle et femelle (20, 30) l'un par rapport à l'autre et empêcher une séparation radiale des surfaces coniques d'étanchéité en contact réciproque lorsque le joint (10) est soumis à une pression interne, à une pression externe ou aux deux.

2. Joint selon la revendication 1, caractérisé en ce que les filetages (70, 80) possèdent une forme conique inclinée par rapport à l'axe des éléments tubulaires.

3. Joint selon la revendication 1 ou 2, caractérisé en ce que l'angle de conicité des filetages (70, 80) et l'angle de conicité des surfaces coniques supplémentaires d'étanchéité sont égaux.

4. Joint selon la revendication 1 ou 2, caractérisé en ce que lesdites surfaces coniques d'étanchéité (41, 42) possèdent un angle de conicité différent de l'angle de conicité des filetages (70, 80).

5. Joint selon l'une quelconque des revendications 1 à 4, caractérisé en ce que les angles de conicité desdites surfaces coniques d'étanchéité (41, 42) sont inférieurs à quinze degrés.

6. Joint selon l'une quelconque des revendications 1 à 5, caractérisé en ce que les angles respectifs des flancs de charge négatifs et de l'épaulement (44) d'application d'un couple, orienté selon l'angle opposé, sont inférieurs à trente degrés.

7. Joint selon l'une quelconque des revendications 1 à 6, caractérisé en ce que les filetages (70, 80) desdits organes femelle et mâle (20, 30) fournissent, à l'état raccordé, un ensemble vissé à ajustement serré.

8. Joint selon l'une quelconque des revendications 1 à 7, caractérisé en ce qu'il est prévu trois parties étagées radiales (170, 180, 190) qui sont séparées axialement les unes des autres, au moins l'un desdits épaulements (43'') situés entre les différentes parties étagées (170, 180, 190) constituant ladite butée fixe d'assemblage.

9. Joint selon la revendication 8, caractérisé en ce que chaque épaulement (43'') d'application d'un couple, orienté selon un angle opposé, est situé entre deux surfaces coniques adjacentes d'étanchéité (40', 41', 42').

10. Joint selon la revendication 1 ou 2, caractérisé en ce que l'angle de conicité de la surface conique d'étanchéité (42) de l'organe (20), qui possède l'épaisseur de paroi la plus faible, au niveau de la surface d'étanchéité, est incliné, par rapport à l'axe de l'ensemble raccordé par vissage, sur un angle plus faible que la surface conique complémentaire d'étanchéité (41) de l'organe apparié (20).

11. Joint selon la revendication 10, caractérisé en ce que l'organe possédant l'épaisseur de paroi la plus faible est l'organe femelle (20), dont la surface d'étanchéité (42) est inclinée sur un premier angle par rapport à l'axe de l'organe femelle, et que la surface conique d'étanchéité (41) de l'organe mâle (30) est inclinée, par rapport à l'axe de l'organe mâle (30), sur un angle supérieur à l'angle de conicité de l'organe femelle (20), et dans lequel l'adaptation initiale de ladite surface conique mâle d'étanchéité (41) à la surface conique femelle d'étanchéité (42) développe une charge d'appui produite par le bord arrière de la surface mâle d'étanchéité (41) essentiellement sur le bord avant de la surface femelle d'étanchéité (42), et dans lequel la différence d'angle entre la surface mâle d'étanchéité (41) et la surface femelle d'étanchéité (42) est choisie de telle sorte que la charge d'appui sur toute la largeur axiale de la zone d'étanchéité entre la surface femelle conique d'étanchéité (42) et la surface conique mâle d'étanchéité (42), qui sont appariées entre elles, est répartie d'une manière relativement uniforme lors de l'assemblage final.

12. Joint selon la revendication 11, caractérisé par un second joint conique adjacent d'étanchéité entre la partie étagée inférieure (80) et l'épaulement (43) d'application d'un couple, orienté selon un angle opposé, et dans lequel la seconde surface conique d'étanchéité (45) de l'élément femelle (20) est inclinée, par rapport à l'axe femelle, sur un angle et la seconde surface conique d'étanchéité (45) de l'organe mâle (30) est inclinée, par rapport à l'axe de l'organe mâle (30), sur un angle inférieur à l'angle de conicité de l'organe femelle (20), et dans lequel, lors de l'adaptation initiale de la seconde surface conique mâle d'étanchéité (45) avec la seconde surface conique femelle d'étanchéité (45), la charge d'appui est produite par le bord arrière de la seconde surface femelle d'étanchéité (45), essentiellement sur le bord avant de la seconde surface mâle d'étanchéité (45), et dans lequel la différence d'angle entre la seconde surface mâle d'étanchéité (45) et la seconde surface femelle d'étanchéité (45) est choisie de telle sorte que la charge d'appui sur l'ensemble de la largeur axiale de la zone d'étanchéité établie entre la seconde surface conique femelle d'étanchéité (45) et la seconde surface conique mâle d'étanchéité (45), adaptées l'une à l'autre, est distribuée d'une manière relativement uniforme lors de l'assemblage final.

13. Joint selon la revendication 10, caractérisé en ce que la surface d'étanchéité (42) de l'organe femelle (20) est inclinée sur un premier angle par rapport à l'axe de l'organe femelle, et la surface d'étanchéité conique (41') de l'organe mâle (30) est inclinée par rapport à l'axe de l'organe mâle (30) sur un angle inférieur à l'angle de conicité de l'organe femelle (20), et dans lequel l'adaptation initiale de la surface conique mâle d'étanchéité (41') avec la surface conique femelle d'étanchéité (42') développe une charge d'appui produite par le bord arrière de la surface femelle d'étanchéité (42') essentiellement sur le bord avant de ladite surface mâle d'étanchéité (41'), et dans lequel la différence d'angle entre la surface mâle d'étanchéité (41') et la surface femelle d'étanchéité (42'), est choisie de sorte que la charge d'appui appliquée sur l'ensemble de la largeur axiale de la zone d'étanchéité établie entre la surface conique femelle d'étanchéité (42') et la surface conique mâle d'étanchéité (41'), appariées l'une à l'autre, est distribuée de façon uniforme lors de l'assemblage final.

14. Assemblage final selon l'une quelconque des revendications précédentes, caractérisé en ce que la surface conique d'étanchéité (41) de l'organe mâle est formée sur une paroi de canalisation essentiellement massive, d'une manière ininterrompue depuis l'intérieur de l'organe mâle (30) jusqu'à la surface d'étanchéité (41) de ce dernier.

FIG.1

FIG.1A

FIG.1B

0 131 621

FIG.3

FIG.3A

FIG.2

FIG. 4A

FIG. 4B